# EUROPEAN PATENT APPLICATION

(11) **EP 2 381 160 A1**
(43) Date of publication of application: **26.10.2011**
(21) Application number: 09839241.8
(22) Date of filing: 07.09.2009
(51) Int. Cl.: F21S 2/00

(54) **LIGHTING DEVICE AND LIQUID CRYSTAL DISPLAY DEVICE**

(30) Priority: 02.02.2009 JP 2009021106
(71) Applicant: Sharp Kabushiki Kaisha, Osaka-shi, Osaka 545-8522 (JP)
(72) Inventor: ITOH, Kohji, Osaka 545-8522 (JP)
(74) Representative: Müller-Boré & Partner Patentanwälte
(86) International application number: PCT/JP2009/065610
(87) International publication number: WO 2010/087052

(57) **Abstract**

A reinforcement plate 2a is fastened to a BL chassis 1 by a screw 13 that is turned and fitted into a first screw hole 9; and at a second screw hole 10, predetermined gaps are formed between the reinforcement plate 2a and the BL chassis 1 and between the reinforcement plate 2a and the screw 13. According to this, the reinforcement plate 2a is completely fixed to the BL chassis 1 at a central through-hole 8a only while at through-holes 8b, 8c on both sides, the reinforcement plate 2a is held movably by a predetermined amount in a horizontal direction and a thickness direction.

## Description

### Technical Field

The present invention relates to a lighting device that is used in, for example, a liquid crystal display device, more particularly, to a frame structure of a lighting device that is composed of a combination of different materials.

### Background Art

Conventionally, as for a lighting device that is used for a backlight unit of a liquid crystal display device, in a case where an LED is used as a light source, the light amount of the LED is relatively small, so that the lighting device is used for small electronic devices such as a PDA (Personal Digital Assistant), a mobile phone and the like; in lighting devices of large electronic devices such as a flat television and the like, a cold-cathode fluorescent lamp which has a relatively large light amount is used for a light source. However, in recent years, because of the development of high-brightness LEDs, an LED is beginning to be used as the light source for a lighting device as well of a large electronic device.

Besides, as a material of a backlight chassis (hereinafter, called a BL chassis) that holds a light source and an optical member, in consideration of cost and performance, metal plates such as a SECC (zinc-plated metal plate) and the like are used; to increase rigidity of the BL chassis, a method for fixing a reinforcement member which is formed of an aluminum material or the like is general.

In the mean time, in a case of a flat television, gaps between a BL chassis and a light guide late, the BL chassis and an optical sheet, and the BL chassis and a liquid crystal panel are small, so that there is a problem that a warp of the chassis due to a temperature change during an operation time has an adverse influence directly on the optical member and the liquid crystal panel, thereby causing warps of the optical member and the liquid crystal panel, and defective display such as a void in the liquid crystal and the like.

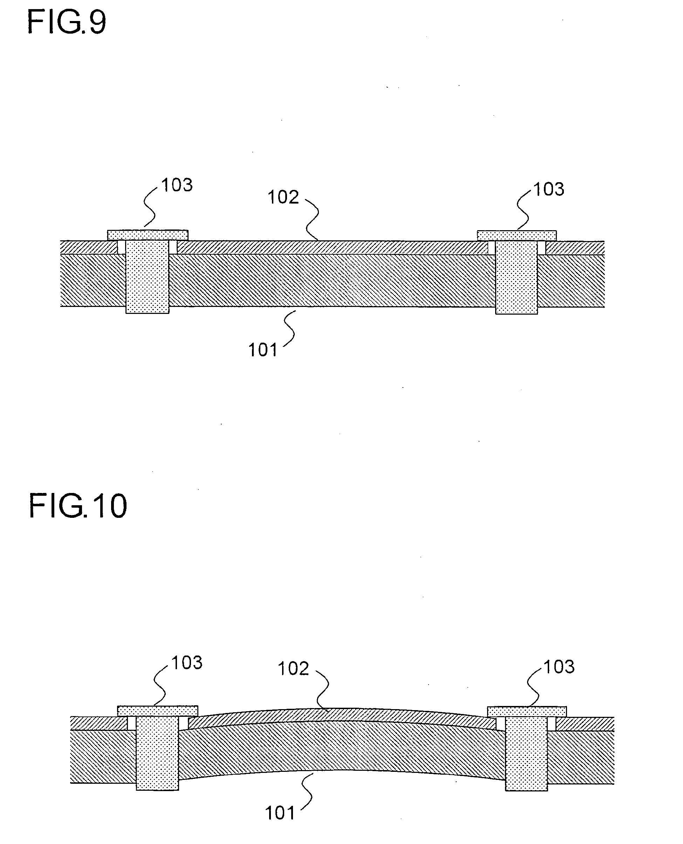

Fig. 10 is a sectional view showing a conventional method for fixing a BL chassis and a reinforcement member. As shown in Fig. 10, when a BL chassis 101 made of a SECC and a reinforcement member 102 made of aluminum are fastened and fixed to each other by a screw 103, thermal expansion coefficients of the SECC and the aluminum are different form each other, so that if temperatures of the BL chassis 101 and the reinforcement member 102 increases thanks to heat generation from the LED that is used as the light source, as shown in Fig. 11, a difference occurs between the thermal expansion amounts of the BL chassis 101 and the reinforcement member 102, and a warp occurs in the reinforcement member 102 that has a large stretching amount; under the influence, a strain occurs in the BL chassis 101 as well.

Accordingly, a method is proposed, which prevents a strain due to a temperature increase of a chassis that uses two members which have different thermal expansion rates; a patent document 1 discloses an image display device in which when connecting a panel chassis and a housing chassis to each other, by means of a stepped fixing screw that is provided with a straight portion having no screw thread, a gap is formed between members to allow each member to move by the gap amount.

### Citation List

### Patent Literature

PLT1: JP-A-2006-308825

### Summary of Invention

### Technical Problem

According to the method of the patent document 1, even if thermal expansions occur in each member thanks to heat generation during an operation time of the image display device, it becomes possible to absorb a difference between the thermal expansions by means of the gap, so that it is possible to curb a strain of the chassis and a deformation of the display panel due to the strain. However, in this method, because a gap is also formed in a thickness direction of the chassis, the panel chassis and the housing chassis are not fixed completely, so that looseness occurs in the chassis thanks to external force.

Because of this, in a case where the BL chassis and the reinforcement member are connected to each other by means of the method of the patent document 1, the looseness of the chassis leads to looseness of the optical member and the liquid crystal panel that are held in the chassis, so that there is a risk that when transporting the product, the optical member and the panel inside the product are vibrated to be damaged and defective display occurs.

The present invention has been made to deal with the above problems, and it is an object of the present invention to provide a lighting device that is able to surely fix a chassis and a reinforcement member to each other that have different thermal expansion rates and effectively curb a warp of the chassis due to a difference between thermal expansions; and a liquid crystal display device that includes the lighting device.

### Solution to Problem

To achieve the above object, a lighting device according the present invention includes:
a housing in which a light source and an optical member that guides light from the light source in a predetermined direction;
a reinforcement member that is fixed to the housing and formed of a material different from the housing; and
a connection member that fixes the reinforcement member and the housing to each other at one point and holds the reinforcement member at two or more points such that the reinforcement member is slidable by a predetermined amount with respect to the housing.

According to the above structure, the hosing and the reinforcement member which have different materials are fixed to each other at one point, and at two or more points, the reinforcement member is held movably by a predetermined amount with respect to the housing; accordingly, the housing and the reinforcement member are surely fixed to each other at one point and the sliding of the reinforcement member with respect to the housing is allowed at the other points, so that a lighting device is obtained, which is able to absorb a difference between thermal expansion amounts and effectively curb a warp and a strain of the housing and the reinforcement member.

Besides, in the lighting device according to an embodiment of the present invention, the connection member is a screw;
the reinforcement member is provided with a plurality of through-holes which the screw penetrates; and
the housing is provided with: a first screw hole which lies over one of the through-holes and is used to fasten the housing and the reinforcement member to each other by means of the screw; and a second screw hole which lies over another of the through-holes and into which the screw is turned and fitted with a predetermined gap away from the reinforcement member.

According to the above embodiment, it is possible to achieve a fixing structure of the housing and the reinforcement member and a slidable holding structure by means of a simple structure that uses the screw.

Besides, in the lighting device according to the embodiment of the present invention, the screw includes: a shank portion which is turned and fitted into the first screw hole or the second screw hole; and a head portion which is integrally formed with the shank portion at a tip end of the shank portion; and
an outer diameter of the shank portion is smaller than an inner diameter of the through-hole and a diameter of the head portion is larger than the inner diameter of the through-hole.

According to the above embodiment, it is possible to surely fasten the reinforcement member at the first screw hole; and at the second screw hole, it is possible to allow sliding of the reinforcement member in a horizontal direction and curb vibration of the reinforcement member in a thickness direction.

Besides, in the lighting device according to the embodiment of the present invention, the housing is provided with a cylindrical boss which protrudes from an open edge of the second screw hole toward a fixing-surface side of the reinforcement member; and
a protrusion amount of the boss is larger than a thickness of the reinforcement member and an outer diameter of the boss is smaller than the inner diameter of the through-hole.

According to the above embodiment, at the second screw hole, it is possible to surely form a gap between the reinforcement member and the screw, and between the reinforcement member and the housing. Besides, it is possible to adjust the gap between the reinforcement member and the screw by means of the protrusion amount of the boss, so that it is possible to use a screw that is common to the first screw hole and the second screw hole. Further, thanks to the engagement between the boss and the through-hole, positioning of the reinforcement member becomes easy.

Besides, in the lighting device according to the embodiment of the present invention, the first screw hole is formed at a position where substantially a central portion of the reinforcement member is able to be fastened.

According to the above embodiment, it is possible to make the thermal expansion amount of the housing or of the reinforcement member substantially equal with respect to the first screw hole that is the place where the reinforcement member and the housing are fastened to each other.

Besides, in the lighting device according to the embodiment of the present invention, a plurality of the second screw holes are formed at symmetrical positions with respect to the first screw hole.

According to the above embodiment, it is possible to stably hold the reinforcement member and equally absorb the thermal expansion of the housing or the reinforcement member.

Besides, a liquid crystal display device according to the present invention includes: the lighting device having the above structure; and
a liquid crystal panel in which liquid crystal is injected between a pair of opposite electrode boards;
wherein the lighting device shines light onto the liquid crystal panel from a rear surface of the liquid crystal panel to perform image display.

According to the above structure, a liquid crystal display device is obtained, which is flat and has a light weight, also excellent in rigidity and in which a thermal deformation of the housing due to heat generation is unlikely to occur.

### Advantageous Effects of Invention

According to the present invention, it is possible to provide a lighting device and a liquid crystal display device that are able to surely fix a housing and a reinforcement member to each other; absorb a difference between thermal expansion amounts of the housing and the reinforcement member by means of sliding between the housing and the reinforcement member, thereby effectively curb a warp and a strain of the housing and the reinforcement member.

### Brief Description of Drawings

[Fig. 1] is an exploded perspective view of a liquid crystal display device in which a backlight unit according to the present invention is incorporated.
[Fig. 2] is a perspective view showing a BL chassis and a reinforcement frame that constitute a backlight unit according to the present invention.
[Fig. 3] is a sectional view showing a state in which a reinforcement plate is mounted in the inside of a BL chassis.
[Fig. 4] is a sectional view showing a state in which a BL chassis and a reinforcement plate are fastened to each other by means of a screw.
[Fig. 5] is a partially enlarged view around a boss (in a broken-line circle S) in Fig. 4.
[Fig. 6] is a sectional view showing a state in which a reinforcement plate expands in a horizontal direction with respect to a first screw hole.
[Fig. 7] is a sectional view showing another example of mounting a BL chassis and a reinforcement plate.
[Fig. 8] is a perspective view sowing a structure in which two reinforcement plates are mounted on only long-edge sides of a BL chassis.
[Fig. 9] is a sectional view showing a conventional method for fixing a BL chassis and a reinforcement member.
[Fig. 10] is a sectional view showing a state in which a difference occurs between thermal expansion amounts of a BL chassis and a reinforcement member; and a warp occurs in the reinforcement member.

### Description of Embodiments

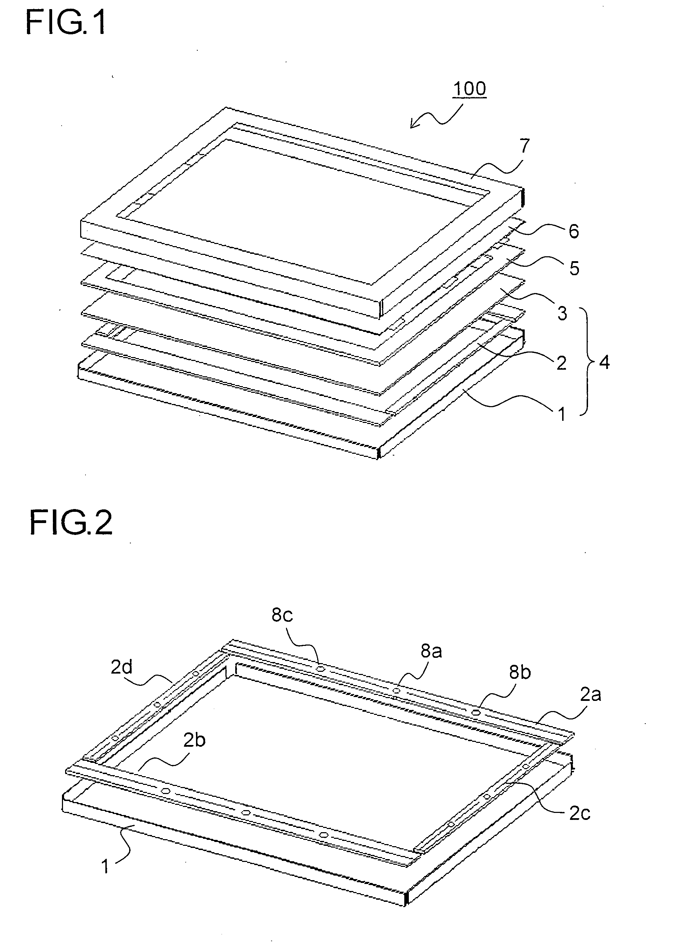

Hereinafter, embodiments of the present invention are described with reference to the drawings. Fig. 1 is an exploded perspective view showing a liquid crystal display device which includes a lighting device according to the present invention. In Fig. 1, a liquid crystal display device (here, a flat television) 100 includes as chief constituent elements: a backlight unit 4 that includes a BL chassis 1, a reinforcement frame 2 and an optical member 3; a panel frame 5; a liquid crystal panel 6; and a bezel 7; the BL chassis 1 and the bezel 7 are assembled to constitute a housing of the liquid crystal display device 100. Here, a cable, a connector and the like that are connected to the backlight unit 4 and the liquid crystal panel 6 are not shown.

The BL chassis 1 is a member that serves as a base for mounting a backlight source (not shown) such as an LED, a cold-cathode fluorescent lamp (CCFL) and the like and an optical member 3 that constitute the backlight unit 4. This BL chassis 1 is a member that is crucial to thickness and weight reductions of the liquid crystal display device 100; in the present embodiment, SECC having a thickness of 0.8 to 1.0 mm is used; however, besides SECC, the BL chassis 1 may be formed of a metal such as iron, aluminum, stainless steel and the like or a carbon matrix-composite such as a CFRP (carbon fiber reinforces plastic) and the like.
The reinforcement frame 2 is a member that compensates for a decrease in the strength of the BL chassis 1 due to thickness and weight reductions of the liquid crystal display device 100. As a material of the reinforcement frame 2, there are metals such as aluminum, SECC, iron and the like and synthetic resins such as CFRP, PC (polycarbonate) and acrylonitrile butadiene styrene (ABS) resins. In the present embodiment, a plate member made of aluminum is used for the weight reduction.
The optical member 3 is a member that makes the backlight unit 4 emit light efficiently and is composed of: a diffusion sheet, a light collection sheet (prism sheet) and the like. The diffusion sheet is provided with minute concaves and convexes on one surface and diffuses light emitted from the backlight source. The light collection sheet is provided with a prism surface on an upper surface and increases brightness in a direction to the liquid crystal panel 6.
The panel frame 5 is a member that supports the liquid crystal panel 6; the panel frame 5 and the liquid crystal panel 6 are integrally fixed to each other by means of a both-surface adhesive tape for fixing a liquid crystal panel. The panel frame 5 is usually formed of a resin material such as polycarbonate and the like.
The liquid crystal panel 6 is composed of a TFT circuit board, a liquid crystal and a color filter circuit board that are not shown. This liquid crystal panel 6 includes an effective display area for displaying a desired image and a frame portion around the effective display area; on the frame portion, a driver IC for controlling operation of the liquid crystal panel 6 is disposed.

The bezel 7 is a frame-shape member that fixes the liquid crystal panel 6 to the backlight unit 4 and the effective display area of the liquid crystal panel 6 is exposed from a central window portion. In corresponding portions of the BL chassis 1 and the bezel 7, a fitting claw and a fitting hole, or a screw hole (not shown) and the like are formed; the bezel 7 collaborates with the BL chassis 1 to sandwich and support the components housed in the BL chassis 1 with an appropriate pressure such that the components do not come out of the BL chassis 1 while protecting the components from vibration and impacts such as fall and the like.

Fig. 2 is a perspective view showing the BL chassis 1 and the reinforcement frame 2 that constitute the backlight unit 4. The reinforcement frame 2 includes four reinforcement plates 2a to 2d that are disposed along four edges of the BL chassis 1; through each of the reinforcement plates 2a to 2d, a through-hole 8a is formed at a central portion in a longitudinal direction; through both the right and left sides of the through-hole 8a, through-holes 8b, 8c are formed.

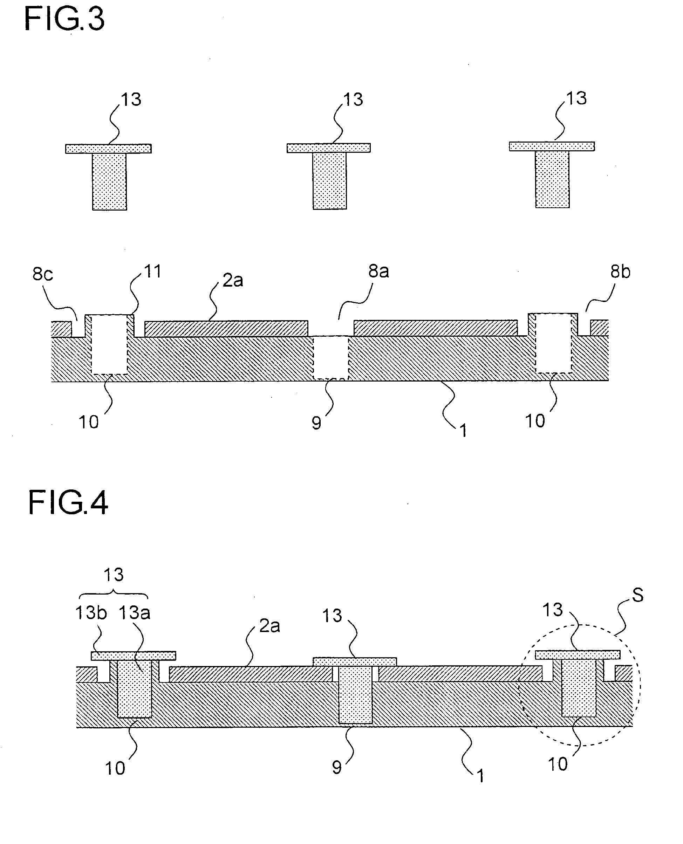

Fig. 3 is a sectional enlarged view showing a state in which the reinforcement plate 2a is mounted in the inside of the BL chassis 1. Hereinafter, a method for fixing the reinforcement plate 2a to the BL chassis 1 is described; the fixing of the other reinforcement plates 2b to 2d to the BL chassis 1 is performed with the same method. The BL chassis 1 is provided with a first screw hole 9 at a position that corresponds to the through-hole 8a of the reinforcement plate 2a and second screw holes 10 that correspond to the through-holes 8b, 8c.

Besides, at an inner portion of the BL chassis 1, a cylindrical boss 11 which protrudes along an open edge of the second screw hole 10 is formed. In the present embodiment, as a material of the boss 11, iron is used; however, other materials such as aluminum, a resin and the like may be used. Besides, the boss 11 may be fixed to the BL chassis 1 as a separate member or may be integrally formed with the BL chassis 1.

And, as shown in Fig. 4, three screws 13 are turned and fitted into the first screw hole 9 and the second screw holes 10 via the through-holes 8a to 8b, so that the BL chassis 1 and the reinforcement plate 2a are fixed to each other. The screw 13 includes: a shank portion 13a that is turned and fitted into the first and second screw holes 9, 10; and a head portion 13a that is formed at a tip end of the shank portion 13a; usually, an iron screw is used; however, a screw made of other materials may be used.

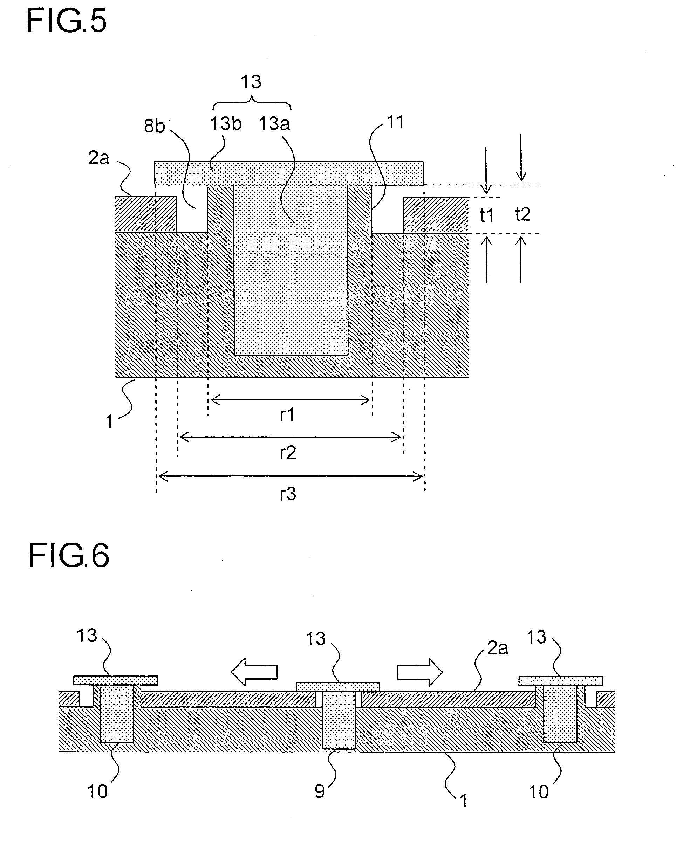

Fig. 5 is a partially enlarged view around the boss 11 (in a broken-line circle S) in Fig. 4. As shown in Fig. 5, when the thickness of the reinforcement plate 2a is t1 and the protrusion amount of the boss 11 beyond the upper surface of the BL chassis 1 is t2, setting is so performed as to be t1<t2. Besides, when the outer diameter of the boss 11 is r1, the inner diameter of the through-holes 8b (8a, 8c) is r2 and the diameter of the head portion 13b of the screw 13 is r3, setting is so performed as to be r1<r2<r3.

According to this structure, the reinforcement plate 2a is fastened to the BL chassis 1 by the screw 13 that is turned and fitted into the first screw hole 9; at the second screw hole 10, predetermined gaps are secured between the reinforcement plate 2a and the BL chassis 1, and between the reinforcement plate 2a and the screw 13. In other words, the reinforcement plate 2a is completely fixed at the central through-hole 8a only while at the through-holes 8b, 8c on both sides, the reinforcement plate 2a is held movably by a predetermined amount with respect to the BL chassis 1 in a horizontal direction and a thickness direction.

Accordingly, as shown in Fig. 6, with respect to the central fastening position (first screw hole 9), the reinforcement plate 2a is able to expand in the horizontal direction within the gaps between the boss 11 and the through-holes 8b, 8c, so that even in a case where the stretch amount (expansion amount) of the reinforcement plate 2a made of aluminum due to heat generation of the backlight unit 4 exceeds the stretch amount of the BL chassis 1 made of SECC, it is possible to curb a warp and a strain of the BL chassis 1 and the reinforcement plate 2a. Besides, the central portion of the reinforcement plate 2a is completely fixed to the BL chassis 1, so that looseness of the reinforcement plate 2a does not occur.

Besides, the diameter r3 of the head portion 13b of the screw 13 is larger than the inner diameter r2 of the through-holes 8a to 8c, so that it is possible to surely fasten the reinforcement plate 2a at the first screw hole 9 and curb a vibration in the thickness direction of the reinforcement plate 2a at the second screw hole 10.

Further, the boss 11 formed around the second screw hole 10 is loosely inserted into the through-holes 8b and 8c of the reinforcement plate 2a, so that the boss 11 plays a role of a positioning mechanism in mounting the reinforcement plate 2a on the BL chassis 1 and the assembly efficiency of the backlight unit 4 improves.

Here, the assembly of the BL chassis 1 made of SECC and the reinforcement plate 2a made of aluminum is described as an example; however, assembly of the BL chassis 1 made of aluminum and the reinforcement plate 2a made of SECC is also possible. Besides, for the weight reduction, as the materials of the BL chassis 1 and the reinforcement plate 2a, it is also possible to use a combination of a steel plate (thermal expansion rate: 12.1 × 10⁻⁶/°C) and a polycarbonate resin or an ABS resin (thermal expansion rate: 70 to 74 × 10⁻⁶/°C), a steel plate and CFRP (thermal expansion rate: 0.7 to 37.5 × 10⁻⁶/°C), aluminum (thermal expansion rate: 23 × 10^{- 6}/°C) and a polycarbonate resin or an ABS resin, or aluminum and CFRP and the like.

It is desirable that the first screw hole 9 which is the fastening position of the reinforcement plate 2a is situated at substantially the central portion of the reinforcement plate 2a where the expansion amount of the reinforcement plate 2a becomes substantially equal with respect to the fastening position; however, another position may be used. Besides, it is possible to suitably change the position and number of second screw holes 10 around which the boss 11 is formed in accordance with the sizes of the BL chassis 1 and the reinforcement plate 2a; however, to hold stably the reinforcement plate 2a and equally absorb the expansion of the reinforcement plate 2a, it is desirable that the second screw holes 10 are situated at symmetrical positions with respect to the first screw hole 9.

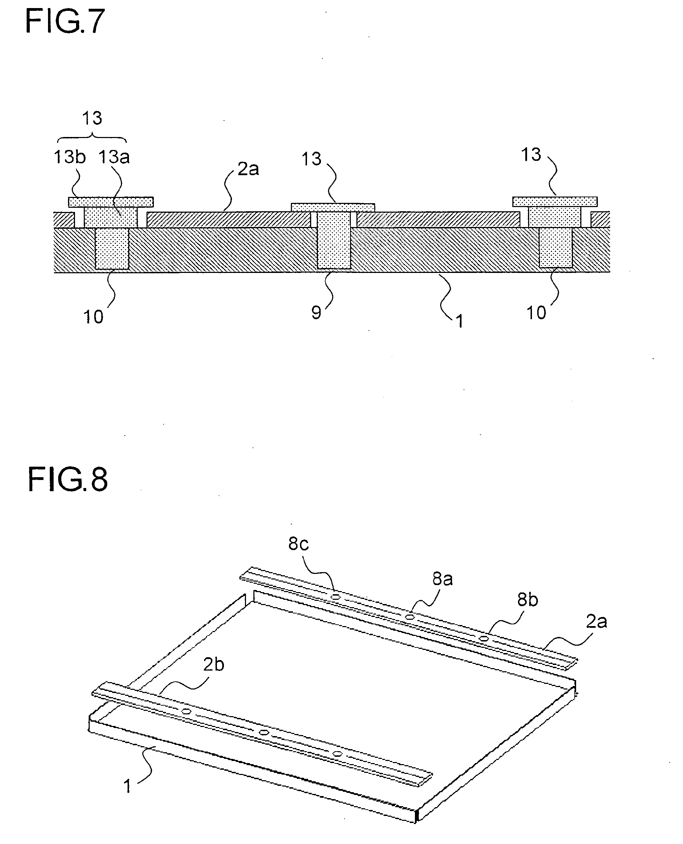

Fig. 7 is a sectional view showing another example of mounting the BL chassis 1 and the reinforcement plate 2a. In Fig. 7, the boss 11 is not formed around the second screw hole 10; and as the screw 13 that is turned and fitted into the second screw hole 10, a stepped screw which is provided with a step on the shank portion 13a is used, so that a gap is formed between the reinforcement plate 2a and the screw 13 at the second screw hole 10.

However, in the structure in Fig. 7, two kinds of screws 13 are necessary and the number of components increases. Besides, the positioning of the reinforcement plate 2a with respect to the BL chassis 1 becomes onerous. Because of this, the structure in Fig 3 is more desirable in which it is possible to use the screw 13 common to the first screw hole 9 and the second screw hole 10; and the positioning of the reinforcement plate 2a is easy.

Besides, in the above embodiments, the example, in which the reinforcement plates 2a to 2d as the reinforcement frame 2 are mounted on the four edges of the BL chassis 1, is described; however, in a case where there is no problem in terms of the strength, as shown in Fig. 8, the two reinforcement plates 2a, 2b may be mounted on only a long-edge side of the BL chassis 1. Besides, the reinforcement plates 2c, 2d (see Fig. 2) may be mounted on only a short-edge side of the BL chassis 1. Further, in the above embodiments, as the connection member of the BL chassis 1 and the reinforcement plates 2a to 2d, the screw 13 is used; however, instead of the screw, it is also possible to use other connection members such as a rivet, an eyelet and the like.

It is possible to incorporate, along with the liquid crystal panel 6 (see Fig. 1), the backlight unit 4 described in the above embodiments in housings of a liquid crystal television, a personal computer and the like. According to this, it is possible to provide a liquid crystal display device in which a thermal deformation of a BL chassis due to heat generation from an LED is unlikely to occur; and contribute to thickness and weight reductions of each product that includes a liquid crystal display device which is strongly desired in recent years.

Besides, the present invention is not limited to the above embodiments; and various modifications are possible without departing from the spirit of the present invention. In other words, it is needless to say that it is possible to suitably use combinations of the above embodiments in accordance with applications and purposes. Besides, the lighting device according to the present invention may be used in an image display device other than the liquid crystal display device according to the present invention.

### Industrial Applicability

The present invention is applicable to a frame structure of a lighting device that is composed of a combination of different materials; and provides a lighting device that surely fixes a housing and a reinforcement member made of different materials and has an effect of curbing a warp and a strain of the housing and the reinforcement member due to a difference between thermal expansion amounts.

Besides, by incorporating the lighting device as a backlight unit, it is possible to provide a liquid crystal display device such as a flat liquid crystal television, a liquid crystal monitor and the like which are excellent in producibility and durability; and also contribute to thickness and weight reductions of the device.

### Reference Signs List

- 1: BL chassis (housing)
- 2: reinforcement frame (reinforcement member)
- 2a to 2d: reinforcement plates (reinforcement members)
- 3: optical member
- 4: backlight unit (lighting device)
- 5: panel frame
- 6: liquid crystal panel
- 7: bezel
- 8a to 8c: through-holes
- 9: first screw hole
- 10: second screw hole
- 11: boss
- 13: screw (connection member)
- 13a: shank portion
- 13b: head portion
- 100: liquid crystal display device

## Claims

1. A lighting device comprising:
a housing in which a light source and an optical member that guides light from the light source in a predetermined direction;
a reinforcement member that is fixed to the housing and formed of a material different from the housing; and
a connection member that fixes the reinforcement member and the housing to each other at one point and holds the reinforcement member at two or more points such that the reinforcement member is slidable by a predetermined amount with respect to the housing.

2. The lighting device according to claim 1, wherein
the connection member is a screw;
the reinforcement member is provided with a plurality of through-holes which the screw penetrates; and
the housing is provided with: a first screw hole which lies over one of the through-holes and is used to fasten the housing and the reinforcement member to each other by means of the screw; and a second screw hole which lies over another of the through-holes and into which the screw is turned and fitted with a predetermined gap away from the reinforcement member.

3. The lighting device according to claim 2, wherein
the screw includes: a shank portion which is turned and fitted into the first screw hole or the second screw hole; and a head portion which is integrally formed with the shank portion at a tip end of the shank portion; and
an outer diameter of the shank portion is smaller than an inner diameter of the through-hole and a diameter of the head portion is larger than the inner diameter of the through-hole.

4. The lighting device according to claim 3, wherein
the housing is provided with a cylindrical boss which protrudes from an open edge of the second screw hole to a fixing-surface side of the reinforcement member; and
a protrusion amount of the boss is larger than a thickness of the reinforcement member and an outer diameter of the boss is smaller than the inner diameter of the through-hole.

5. The lighting device according to claim 2, wherein the first screw hole is formed at a position where substantially a central portion of the reinforcement member is able to be fastened.

6. The lighting device according to claim 5, wherein a plurality of the second screw holes are formed at symmetrical positions with respect to the first screw hole.

7. A liquid crystal display device comprising:
the lighting device according to any one of claims 1 to 6; and
a liquid crystal panel in which liquid crystal is injected between a pair of opposite electrode boards;
wherein the lighting device shines light onto the liquid crystal panel from a rear surface of the liquid crystal panel to perform image display.
